# EUROPÄISCHE PATENTSCHRIFT

(11) **EP 0 642 715 B1**
(45) Veröffentlichungstag und Bekanntmachung des Hinweises auf die Patenterteilung: **04.10.2001**
(21) Anmeldenummer: 94911066.2
(22) Anmeldetag: 22.03.1994
(51) Int. Cl.: H04B 1/16, H04B 1/10

(54) **RUNDFUNKEMPFÄNGER MIT DIGITALER SIGNALVERARBEITUNG**
RADIO RECEIVER WITH DIGITAL SIGNAL PROCESSING
RECEPTEUR RADIO A TRAITEMENT NUMERIQUE DE SIGNAUX

(30) Priorität: 24.03.1993 DE 4309518
(43) Veröffentlichungstag der Anmeldung: 15.03.1995
(73) Patentinhaber: Blaupunkt-Werke GmbH, 31132 Hildesheim (DE)
(72) Erfinder: CHAHABADI, Djahanyar, D-31139 Hildesheim (DE); HERRMANN, Matthias, D-31141 Hildesheim (DE); VOGT, Lothar, D-31249 Hohenhameln (DE)
(86) Internationale Anmeldenummer: DE9400326
(87) Internationale Veröffentlichungsnummer: WO9422232

(56) Entgegenhaltungen:
- EP-A- 0 418 036
- EP-A- 0 449 199
- SIGNAL PROCESSING IV: THEORIES AND APPLICATIONS, Bd.2, 5. August 1988, GRENOBLE,FR Seiten 499 - 502, XP93955 REICH ET AL 'DIGITAL FM-STEREO DEMODULATION AND DECODING'
- DIGITAL SIGNAL PROCESSING, Bd.2, Nr.1, Januar 1992, ORLANDO,FL,US Seiten 2 - 13, XP387796 BAKHRU 'Communications Receiver Design Using Digital Signal Processing'

## Beschreibung

Die Erfindung betrifft einen Rundfunkempfänger mit digitaler Signalverarbeitung.

Zur digitalen Signalverarbeitung sind Prozessoren bekanntgeworden, die zur Anpassung an die jeweiligen Aufgaben programmierbar sind. Damit können beispielsweise Signalverarbeitungen wie Additionen oder Multiplikationen der einzelnen Abtastwerte der digitalen Signale aber auch wesentlich komplexere Verarbeitungen, wie beispielsweise digitale Filter, realisiert werden. In einem Rundfunkempfänger sind viele verschiedene Signale vorhanden, die im Falle einer Realisierung mit einem oder mehreren digitalen Signalprozessoren quasi gleichzeitig verarbeitet werden müssen. Dadurch entstehen recht hohe Anforderungen an die Rechenleistungen der benötigten Signalprozessoren.

Aus Signal Processing IV: Theories and Applications, Bd. 2, 5.8.1988, Grenoble, Frankreich, Seiten 499 bis 502, Reich et al. "Digital FM-Stereo Demodulation and Decoding" sind grundsätzlich Rundfunkempfänger bekannt, die eine digitale Signalverarbeitung, insbesondere eine digitale Demodulation und Decodierung, eines empfangenen Rundfunksignals durchführen.

Aus Digital Signal Processing, Bd. 2, Nummer 1, Januar 1992, Orlando, Florida, USA, Seiten 2-13, Bakhru "Communications receiver design using digital signal processing" ist ebenso eine Anordnung zur digitalen Verarbeitung empfangener Rundfunksignal bekannt, wobei aufgrund der Erkenntnis, daß FM-Rundfunksignale nur eine gegenüber der Trägerfrequenz geringfügige Bandbreite in Anspruch nehmen, eine Unterabtastung des Rundfunksignals vorgenommen wird, was von den darauffolgenden Signalverarbeitungsstufen eine geringere Rechengeschwindigkeit erfordert.

Aus EP 0 418 036 A2 ist eine Anordnung zur Verarbeitung eines empfangenen Rundfunksignals bekannt, die eine Beeinflussung der Stereokanaltrennung in Abhängigkeit von Störungen im empfangenen Rundfunksignal durchführt. Dazu werden das Stereo-Summensignal und das über einen Tiefpaß mit steuerbarer Grenzfrequenz geleitete Stereo-Differenzsignal zur Bildung der beiden Stereokanäle einander überlagert. Durch störungsabhängige Steuerung der Grenzfrequenz des Tiefpassfilters ist damit die Grenzfrequenz, bei der eine Stereo-Kanaltrennung im wiederzugebenden Audiosignal einsetzt, einstellbar.

Schließlich ist aus EP 0 449 199 A2 eine Schaltungsanordnung zur Reduzierung von Störungen in einem wiederzugebenden Rundfunksignal beschrieben, bei der in Abhängigkeit der gemessenen Feldstärke des empfangenen Rundfunksignals und hochfrequenter Störanteile im wiederzugebenden Audiosignal mittels einer Fuzzy-Logik ein Steuersignal zur Beeinflussung der Stereo-Kanaltrennung und zur Beschneidung hochfrequenter Anteile des wiederzugebenden Audiosignals erzeugt wird.

Aufgabe der vorliegenden Erfindung ist es, einen Rundfunkempfänger mit digitaler Signalverabeitung anzugeben, bei welchem die vorhandenen Kapazitäten von Schaltungen zur digitalen Signalverarbeitung, insbesondere digitalen Signalprozessoren, in möglichst günstiger Weise ausgenutzt werden.

Diese Aufgabe wird erfindungsgemäß dadurch gelöst,
- daß ein empfangenes Stereo-Multiplexsignal und daraus abgeleitete Nutzsignale in digitaler Form mit einer ersten Abtastrate verarbeitet werden,
- daß mindestens teilweise aus dem Stereo-Multiplexsignal abgeleitete Hilfssignale mit einer zweiten, gegenüber der ersten kleineren Abtastrate verarbeitet werden,
- daß die Abtastrate der verarbeiteten Hilfssignale auf die erste Abtastrate heraufgesetzt wird und
- daß die verarbeiteten Hilfssignale als Steuersignale mit der ersten Abtastrate auf das Stereo-Multiplexsignal und die Nutzsignale einwirken.

Bei dem erfindungsgemäßen Rundfunkempfänger wird die Kapazität eines digitalen Signalprozessors in besonders günstigster Weise ausgenutzt, so daß nicht nur die Grundfunktionen des Rundfunkempfängers, nämlich ein Empfang und eine Demodulation von Audiosignalen, stattfinden, sondern auch weitere Funktionen möglich sind, beispielsweise die Anpassung der Signalverarbeitung an die Qualität des jeweils empfangenen Signals.

Bei der Heraufsetzung der Abtastrate der verarbeiteten Hilfssignale können Alias-Störungen entstehen. Für den Fall, daß sich diese Störungen in den wiedergegebenen Audiosignalen bemerkbar machen, ist gemäß einer Weiterbildung der Erfindung vorgesehen, daß sich unmittelbar nach Heraufsetzung der Abtastrate der verarbeiteten Hilfssignale auf die erste Abtastrate eine Tiefpaßfilterung anschließt.

Eine Erkennung von Störungen im empfangenen Stereo-Multiplexsignal kann bei einer Weiterbildung der Erfindung dadurch erfolgen, daß ein erstes Hilfssignal abgeleitet wird, das Spektralanteile des Stereo-Multiplexsignals zwischen der oberen Grenze des Nutzfrequenzbereichs des Stereo-Multiplexsignals und der ersten Abtastrate enthält und dessen Abtastrate auf die zweite Abtastrate herabgesetzt wird.

Eine weitere Möglichkeit zum Erkennen von Störungen ist bei einer anderen Weiterbildung dadurch gegeben, daß bei der Stereo-Codierung ein Symmetriesignal erzeugt wird, das in Quadratur zum Differenzband (L-R) steht und das über ein Tiefpaßfilter und eine Abtastraten-Herabsetzung auf die zweite Abtastrate das zweite Hilfssignal bildet.

Ferner ist für die Beurteilung der Qualität eines Signals ebenso wie als Information für einen Sendersuchlauf oder einen probeweisen Empfang alternativer Sender die Empfangsfeldstärke von Bedeutung, die gemäß einer anderen Weiterbildung dadurch gemessen wird, daß aus einem amplitudendemodulierten FM-Zwischenfrequenzsignal durch Tiefpaßfilterung und Abtastraten-Herabsetzung ein drittes Hilfssignal entsteht.

Eine vorteilhafte Ableitung von Steuersignalen im erfindungsgemäßen Rundfunkempfänger ist dadurch möglich, daß durch eine Kombination der Hilfssignale ein erstes Steuersignal entsteht, welches die Stereo-Kanaltrennung beeinflußt und ein zweites Steuersignal, welches im Falle von Störungen die Lautstärke der wiedergegebenen Nutzsignale vermindert.

Eine andere Weiterbildung der Erfindung besteht darin, daß die erste und die zweite Abtastrate in einem ganzzahligen Verhältnis zueinander stehen. Vorzugsweise beträgt dabei die erste Abtastrate 228 kHz und die zweite Abtastrate 9,5 kHz.

Die Verwendung eines mindestens teilweise digitalen Empfangsteils ist in vorteilhafter Weise möglich, wenn das Stereo-Multiplexsignal von einer Empfangseinrichtung in digitaler Form mit einer dritten Abtastrate zuführbar ist, welche oberhalb der ersten Abtastrate liegt und vorzugsweise das Doppelte der ersten Abtastrate beträgt.

Bei einer vorteilhaften Ausgestaltung des erfindungsgemäßen Rundfunkempfängers wird eine Verarbeitung der Signale entsprechend über Abtastraten dadurch möglich,
- daß die Verarbeitung des Stereo-Multiplexsignals, der Nutzsignale, der Hilfssignale und der Steuersignale in einem digitalen Signalprozessor mit Hilfe eines Programms erfolgt, das Programmteile zur Verarbeitung des Stereo-Multiplexsignals und der Nutzsignale und n Programmteile zur Verarbeitung der Hilfs- und Steuersignale umfaßt, wobei n das Verhältnis der ersten zur zweiten Abtastrate ist, und
- daß das Programm an sich mit einer der ersten Abtastrate entsprechenden Frequenz wiederholt durchlaufen wird, wobei bei jedem Durchlauf die Programmteile zur Verarbeitung des Stereo-Multiplexsignals und der Nutzsignale und jeweils eines anderen der Programmteile zur Verarbeitung der Hilfs- und Steuersignale abgearbeitet werden.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild eines erfindungsgemäßen Rundfunkempfängers,
- Fig. 2: eine detailliertere Darstellung einer Schaltung zur Bildung der Steuersignale und
- Fig. 3: eine vereinfachte Darstellung eines Programms für einen im erfindungsgemäßen Rundfunkempfänger vorgesehenen digitalen Signalprozessor.

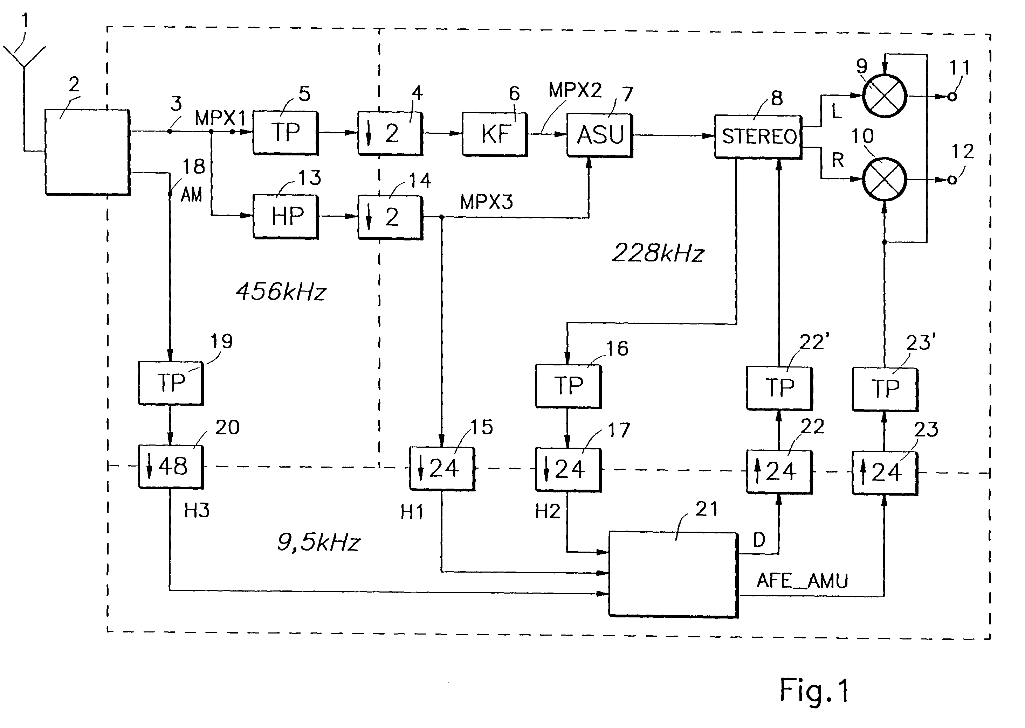

Bei dem in Fig. 1 dargestellten Ausführungsbeispiel wird das über eine Antenne 1 empfangen Signal in einem Empfangsteil (Tuner) 2 in an sich bekannter Weise verstärkt, selektiert und demoduliert. An einem Ausgang 3 des Empfangsteils 2 steht ein Stereo-Multiplexsignal MPX1 mit einer Abtastrate von 456 kHz zur Verfügung. Um eine anschließende Abtastraten-Herabsetzung - auch Dezimation genannt - auf 228 kHz ohne Alias-Störungen zu erreichen, ist vor der Abtastraten-Herabsetzung 4 ein Tiefpaßfilter 5 vorgesehen. Zu einer einwandfreien weiteren Verarbeitung des Stereo-Multiplexsignals ist an sich ein Tiefpaßfilter mit im Durchlaßbereich ebenem Frequenzgang erforderlich. Um den dafür benötigten Aufwand, insbesondere bei der hohen Abtastrate von 456 kHz, zu ersparen, ist bei dem Ausführungsbeispiel ein einfacheres Tiefpaßfilter mit abfallendem Frequenzgang vorgesehen. Der Frequenzgangabfall wird allerdings in einem anschließenden Kompensationsfilter 6 kompensiert.

Das Stereo-Multiplexsignal MPX2 wird danach über eine Schaltung 7 zur automatischen Störunterdrückung geführt, die insbesondere bei Auftreten von Funkenstörungen Abtastwerte vor dem Beginn der Störung bis zum Ende der Störung wiederholt. An diese Schaltung schließt sich ein Stereodecoder 8 an, der zwei Audiosignale L, R erzeugt, die über Multiplizierer 9, 10 zu Ausgängen 11, 12 geleitet werden. Von dort aus werden die Audiosignale über NF-Verstärker den Lautsprechern zugeführt.

Aus dem Stereo-Multiplexsignal MPX1 wird mit Hilfe eines Hochpasses 13 und einer Dezimations-Schaltung 14 ein Signal erzeugt, das oberhalb des Nutzfrequenzbereichs des Stereo-Multiplexsignals vorhandene Signalanteile enthält, die jedoch durch die Dezimation in einen unteren Frequenzbereich gefaltet sind. Dieses Signal MPX3 zeigt verschiedene Störungen an, beispielsweise die durch Zündfunken von Fahrzeugen entstehenden Störungen. Es wird einerseits zur Steuerung der Schaltung 7 zur automatischen Störunterdrückung und andererseits zur Bildung eines Hilfssignals H1 durch Dezimation der Abtastrate auf 9,5 kHz bei 15 verwendet.

Ein weiteres Hilfssignal, dessen Abtastrate ebenfalls 9,5 kHz beträgt, wird durch Tiefpaßfilterung bei 16 und Dezimation bei 17 aus einem Symmetriesignal SY gebildet. Dieses wird wiederum im Stereodecoder 8 geformt. Dort wird bekanntlich der Stereo-Hilfsträger zur Bildung des Differenzsignals L-R amplitudendemoduliert. Dieses geschieht bei dem in Fig. 1 dargestellten Ausführungsbeispiel dadurch, daß der Hilfsträger mit einem im Rundfunkempfänger regenerierten Hilfsträger gleicher Phasenlage multipliziert wird. In dem Stereodecoder 8 wird der Stereo-Hilfsträger zusätzlich mit einem um 90° gegenüber dem Referenzträger gedrehten Träger multipliziert, wodurch ein Signal entsteht, das bei symmetrischen Seitenbändern des Stereo-Hilfsträgers 0 ist und bei Unsymmetrien entsprechend von 0 abweicht. Aus diesem Signal wird durch Tiefpaßfilterung bei 16 und Dezimation bei 17 das weitere Hilfssignal H2 gebildet.

An einem Ausgang 18 gibt das Empfangsteil 2 ein Signal AM ab, das durch Amplitudendemodulation des FM-Zwischenfrequenzsignals entsteht. Dieses weist bei dem dargestellten Ausführungsbeispiel ebenfalls eine Abtastrate von 456 kHz auf und wird nach einer Tiefpaßfilterung 19 bei 20 um den Faktor 48 dezimiert, so daß das entstehende dritte Hilfssignal H3 eine Abtastrate von 9,5 kHz aufweist.

In einer Schaltung 21 werden die Hilfssignale H1, H2 und H3 miteinander zu Steuersignalen D und AFE_AMU kombiniert, deren Abtastrate zunächst 9,5 kHz beträgt, jedoch bei 22 und 23 auf 228 kHz heraufgesetzt wird. Dieses erfolgt durch eine Interpolation von jeweils 24 Abtastwerten, die im einfachsten Fall darin besteht, daß jeder Abtastwert 24 mal wiederholt wird. Das Steuersignal D wird über ein Tiefpaßfilter 22' einem Steuereingang des Stereodecoders 8 zugeführt und dient dort der Umschaltung auf Mono-Betrieb im Fall eines gestörten Empfangs. Das Signal AFE_AMU wird über ein Tiefpaßfilter 23' den Multiplizierern 9 und 10 zugeführt, wodurch eine Herabsetzung der Lautstärke (Maskierung) bei Vorliegen von Störungen vorgenommen wird.

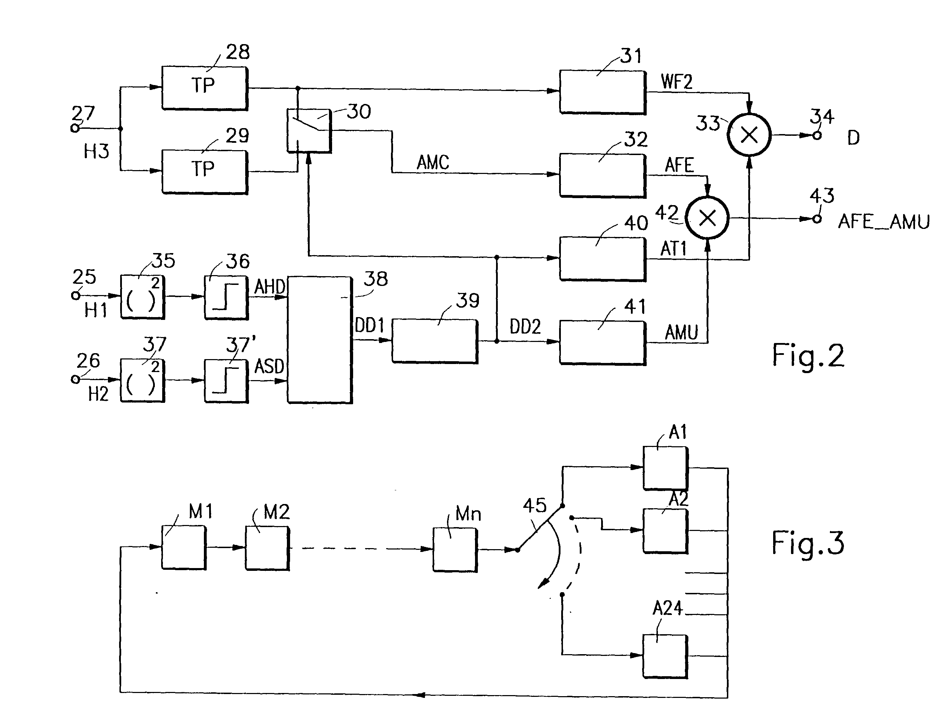

Fig. 2 zeigt ein Ausführungsbeispiel für die Schaltung 21 (Fig. 1). Eingängen 25, 26, 27 werden die Hilfssignale H1, H2 und H3 zugeführt. Das die Empfangsfeldstärke bezeichnende Hilfssignal H3 erfährt in zwei Tiefpaßfiltern 28, 29 eine Mittelung mit unterschiedlichen Zeitkonstanten. Ein Umschalter 30 leitet in Abhängigkeit eines später zu erläuternden Signals DD2 eines der Ausgangssignale der Tiefpaßfilter 28, 29 als Signal AMC weiter. Dieses wird bei 32 in Form einer Aufrauschkurve zur Erzeugung der Aufrauschdämpfung AFE gewichtet. Das Feldstärkesignal mit der kleineren Zeitkonstante wird ferner bei 31 ebenfalls gewichtet (Signal WF2). Dieses wird bei 33 mit einem Signal AT1 zur Bildung des Steuersignals D multipliziert, das am Ausgang 34 zur Verfügung steht.

Zur Erzeugung des Signals DD2 werden die Hilfssignale H2 und H3 herangezogen. Das die Spektralanteile oberhalb des Nutzbereichs des Stereo-Multiplexsignals darstellende Hilfssignal H1 wird dazu bei 35 zunächst quadriert, wodurch ein Maß für den Energie-Inhalt dieser Anteile gebildet wird. Dieses wird bei 36 über einen Schwellwertdetektor geleitet, so daß ein Signal AHD entsteht, das das Vorliegen von Spektralanteilen mit einer über eine vorgegebene Schwelle liegender Energie anzeigt. Das aus dem Symmetriesignal SY (Fig. 1) gebildete Hilfssignal H2 wird nach einer Quadrierung bei 37 über einen Schwellwertdetektor 37' geleitet, dessen Ausgangssignal ASD somit Asymmetrien anzeigt, die eine vorgegebene Schwelle übersteigen. Derartige Asymmetrien deuten unter anderem auf das Vorliegen von Nachbarkanalstörungen hin.

Bei vielen Anwendungsfällen bringt die Verwendung eines der Signale AHD bzw. ASD als Signal DD2 bereits erhebliche Vorteile. Bei dem dargestellten Ausführungsbeispiel sind jedoch beide Detektoren 36, 37 vorgesehen, deren Ausgangssignale AHD und ASD über ein steuerbares logisches Netzwerk 38 geleitet werden. Dieses hat einerseits den Vorteil, daß bei reinen Mono-Sendungen, bei denen kein trägerfrequentes Stereo-Signal gesendet wird, die Ableitung des Signals DD2 aus dem Hilfssignal H1 erfolgt. Ebenso ist die Ableitung des Signals DD2 auch bei von der europäischen Norm abweichenden Verfahren zur Stereo-Signalübertragung möglich - beispielsweise bei dem FMX-Verfahren in den USA.

Das logische Netzwerk 38 ermöglicht eine Auswahl oder eine logische Verknüpfung der beiden Signale AHD und ASD zum Signal DD1. Das logische Netzwerk 38 kann in einfacher Weise aus einem steuerbaren Vierfach-Umschalter gebildet sein, dessen Eingängen die Signale AHD und ASD, eine Oder-Verknüpfung dieser Signale und eine Und-Verknüpfung dieser Signale zuführbar sind. Am Ausgang des steuerbaren Umschalters steht dann das Signal DD1 zur Verfügung, das einem Impulsbreitendiskriminator 39 zugeleitet wird. Dieser sorgt dafür, daß das Signal DD2 erst dann eine Störung anzeigt, wenn das Signal DD1 für eine einstellbare Mindestzeit aktiv ist.

Das Signal DD2 dient außer zur Steuerung des Umschalters 30 als Triggersignal für zwei asymmetrische Integratoren 40, 41. Diese enthalten im wesentlichen jeweils einen Zähler, der im Moment des Triggerns auf 0 oder einen anderen vorgegebenen Wert springt und diesen solange beibehält, wie das Signal DD2 auf 0 liegt. Nimmt das Signal DD2 dann den logischen Pegel 1 an, steigen die Ausgangssignale AT1 und AMU der asymmetrischen Integratoren 40, 41 mit einstellbaren Zeitkonstanten linear auf einen Maximalwert an. Das Signal AT1 wird gemeinsam mit dem bei 32 gewichteten Feldstärkesignal WF2 einem Multiplizierer 33 zugeführt.

Das Ausgangssignal AMU des asymmetrischen Integrators 41 wird bei 42 mit dem Signal AFE multipliziert, wodurch ein Signal AFE_AMU entsteht, das eine Dämpfung der Audiosignale mit Hilfe der Multiplizierer 9, 10 (Fig. 1) um maximal 33 dB bewirkt. Dieses Signal ist der Schaltung am Ausgang 43 entnehmbar.

Das in Fig. 3 stark vereinfacht dargestellte Programm zur Realisierung der mit dem Blockschaltbild nach Fig. 1 erläuterten Funktionen besteht aus einer Schleife, die mit einer Häufigkeit von 228 kHz durchlaufen wird. Dabei werden bei jedem Durchlauf Programmteile M1 bis Mn nacheinander durchlaufen, die einer Verarbeitung der Signale mit einer Abtastfrequenz von 228 kHz dienen. Diese Programmteile realisieren insbesondere das Kompensationsfilter 6, die Schaltung 7 zur automatischen Störunterdrückung, den Stereodecoder 8, die Multiplizierer 9 und 10 sowie das Tiefpaßfilter 15.

Bei jedem Durchlauf wird nach dem Programmteil Mn ein anderes der Programmteile A1 bis A24 durchlaufen. Ein Programmteil, das in Abhängigleit von einer Zählvariablen nach dem Programmteil Mn eines der Programmteile A1 bis A24 aufruft, ist schematisch als Umschalter 45 dargestellt. Die Programmteile A1 bis A24 werden jeweils nur bei jedem 24. Durchlauf abgearbeitet, was mit der Abtastrate von 9,5 kHz korrespondiert. In diesen Programmteilen werden insbesondere die in Fig. 2 als Blockschaltbild dargestellten Funktionen realisiert.

Die Dezimationen 15, 17 werden dadurch realisiert, daß in jeweils einem der Programmteile M1 bis Mn die Abtastwerte des Signals MPX3 bzw. des tiefpaßgefilterten Symmetriesignals SY in einen Speicher eingeschrieben werden und daß von dem jeweiligen Programmteil A1 bis A24, das die Verarbeitung des Signals H1 bzw. H2 durchführt, die gespeicherten Abtastwerte mit der niedrigeren Abtastrate ausgelesen werden. Die Abtastratenumsetzung 22, 23 (Fig. 1) erfolgt dadurch, daß jeweils in einem der Programmteile A1 bis A24 ein Abtastwert des jeweiligen Signals in einen Speicher eingeschrieben wird und daß dieser Abtastwert 24 mal mit der höheren Abtastrate von dem dieses Signal benötigenden Programmteil M1 bis Mn ausgelesen wird. Zur Vermeidung von Alias-Störungen schließt sich an die Abtastratenumsetzung bei 22, 23 (Fig. 1) jeweils eine Tiefpaßfilterung an.

Bei dem dargestellten Ausführungsbeispiel erfolgt die Verarbeitung auf der 456-kHz-Ebene durch einen weiteren Signalprozessor, der im wesentlichen Funktionen innerhalb des Empfangsteils 2, insbesondere die Demodulation des ZF-Signals, durchführt. Die Dezimation 20 erfolgt dann dadurch, daß dieser Signalprozessor die Abtastwerte des Signals AM nach einer Tiefpaßfilterung bei 19 (Fig. 1) mit einer Häufigkeit von 456 kHz in einen Speicher einschreibt, aus dem der Signalprozessor in einem der Programmteile A1 bis A24 Abtastwerte mit der Abtastrate von 9,5 kHz ausliest - also jeden 24. Abtastwert.

## Patentansprüche

1. Verfahren zur digitalen Verarbeitung empfangener Rundfunksignale, wobei ein empfangenes Stereo-Multiplexsignal und daraus abgeleitete Nutzsignale in digitaler Form mit einer ersten Abtastrate verarbeitet werden, wobei mindestens teilweise aus dem Stereo-Multiplexsignal abgeleitete Hilfssignale (H1, H2, H3) auf eine zweite Abtastrate umgesetzt werden, die kleiner als die erste Abtastrate ist und mit der zweiten Abtastrate verarbeitet werden, wobei die Abtastrate der verarbeiteten Hilfssignale auf die erste Abtastrate heraufgesetzt wird, und wobei die verarbeiteten Hilfssignale als Steuersignale (D, AFE-AMU) mit der ersten Abtastrate auf das Stereo-Multiplexsignal und die Nutzsignale (L, R) einwirken.

2. Verfahren nach Anspruch 1, **dadurch gekennzeichnet, daß** sich unmittelbar nach Heraufsetzung der Abtastrate (22, 23) der verarbeiteten Hilfssignale auf die erste Abtastrate eine Tiefpassfilterung (22', 23') anschließt.

3. Verfahren nach einem der Ansprüche 1 oder 2, **dadurch gekennzeichnet, daß** ein erstes Hilfssignal (H1) abgeleitet wird, **daß** Spektralanteile des Stereo-Multiplexsignals zwischen der oberen Grenze des Nutzfrequenzbereichs des Stereo-Multiplexsignals und der ersten Abtastrate enthält und dessen Abtastrate auf die zweite Abtastrate herabgesetzt wird.

4. Verfahren nach einem der Ansprüche 2 oder 3, **dadurch gekennzeichnet, daß** bei der Stereo-Codierung ein Symmetriesignal erzeugt wird, das in Quadratur zum Differenzband (L-R) steht und das über einen Tiefpass (16) und eine Abtastraten-Herabsetzung (17) auf die zweite Abtastrate das zweite Hilfssignal (H2) bildet.

5. Verfahren nach einem der vorhergehenden Ansprüche, **dadurch gekennzeichnet, daß** aus einen amplitudendemodulierten FM-Zwischenfrequenzsignal (18) durch Tiefpassfilterung (19) und Abtastraten-Herabsetzung (20) ein drittes Hilfssignal (H3) entsteht.

6. Verfahren nach einem der vorhergehenden Ansprüche, **dadurch gekennzeichnet, daß** durch eine Kombination der Hilfssignale (H1, H2, H3) ein erstes Steuersignal (D) entsteht, welches die Stereo-Kanaltrennung beeinflußt und ein zweites Steuersignal (AFE-AMU), welches im Falle von Störungen die Lautstärke der wiedergegebenen Nutzsignale (L, R) vermindert.

7. Verfahren nach einem der vorhergehenden Ansprüche, **dadurch gekennzeichnet, daß** die erste und die zweite Abtastrate in einem ganzzahligen Verhältnis zueinander stehen.

8. Verfahren nach Anspruch 7, **dadurch gekennzeichnet, daß** die erste Abtastrate 228 kHz und die zweite Abtastrate 9,5 kHz beträgt.

9. Verfahren nach einem der vorhergehenden Ansprüche, **dadurch gekennzeichnet, daß** das Stereo-Multiplexsignal (MPX 1) von einer Empfangseinrichtung (2) in digitaler Form mit einer dritten Abtastrate zuführbar ist, welche oberhalb der ersten Abtastrate liegt und vorzugsweise das doppelte der ersten Abtastrate beträgt.

10. Verfahren nach einem der vorhergehenden Ansprüche, **dadurch gekennzeichnet, daß** die Verarbeitung des Stereo-Multiplexsignals, der Nutzsignale, der Hilfssignale (H1, H2, H3) und der Steuersignale (D, AFE-AMU) in einem digitalen Signalprozessor mit Hilfe eines Programms erfolgt, das Programmteile zur Verarbeitung des Stereo-Multiplexsignals und der Nutzsignale und n Programmteile zur Verarbeitung der Hilfs- und Steuersignale umfaßt, wobei n das Verhältnis der ersten zur zweiten Abtastrate ist, und **daß** das Programm an sich mit einer der ersten Abtastrate entsprechenden Frequenz wiederholt durchlaufen wird, wobei bei jedem Durchlauf die Programmteile zur Verarbeitung des Stereo-Multiplexsignals und der Nutzsignale und jeweils eines anderen der Programmteile zur Verarbeitung der Hilfs- und Steuersignale abgearbeitet werden.

11. Rundfunkempfänger mit digitaler Signalverarbeitung, mit einem Tuner (2) zum Empfang eines Stereo-Multiplexsignals, mit ersten Mitteln (6, 7, 8, 9, 10) zur Verarbeitung des empfangenen Stereo-Multiplexsignals und davon abgeleiteter Nutzsignale in digitaler Form bei einer ersten Abtastrate, mit Mitteln zur Herabsetzung der Abtastrate (14, 15, 17, 20) zumindest teilweise aus dem Stereo-Multiplexsignal abgeleiteter Hilfssignale auf eine zweite, gegenüber der ersten Abtastrate kleineren Abtastrate, mit weiteren Mitteln zur Verarbeitung der Hilfssignale (H1, H2, H3) mit der zweiten Abtastrate, mit Mitteln zur Heraufsetzung der Abtastrate (22, 23) der verarbeiteten Hilfssignale auf die erste Abtastrate und mit Mitteln (8, 9, 10) zur Beeinflussung des Stereo-Multiplexsignals und der daraus abgeleiteten Nutzsignale durch die aus den Hilfssignalen gebildeten Steuersignale auf der ersten Abtastrate.

## Claims

1. Method for digitally processing received broadcast radio signals, where a received stereo multiplex signal and useful signals derived therefrom are processed in digital form at a first sampling rate, where auxiliary signals (H1, H2, H3) derived, at least to some extent, from the stereo multiplex signal are converted to a second sampling rate, which is lower than the first sampling rate, and are processed at the second sampling rate, where the sampling rate of the processed auxiliary signals is increased to the first sampling rate, and where the processed auxiliary signals, as control signals (D, AFE-AMU) at the first sampling rate, influence the stereo multiplex signal and the useful signals (L, R).

2. Method according to Claim 1, **characterized in that** increasing the sampling rate (22, 23) of the processed auxiliary signals to the first sampling rate is followed directly by low-pass filtering (22', 23').

3. Method according to one of Claims 1 or 2, **characterized in that** a first auxiliary signal (H1) is derived which contains spectral components of the stereo multiplex signal between the upper limit of the useful frequency range of the stereo multiplex signal and the first sampling rate, and whose sampling rate is reduced to the second sampling rate.

4. Method according to one of Claims 2 or 3, **characterized in that**, during the stereo coding, a symmetry signal is produced which is in quadrature with respect to the difference band (L-R) and forms the second auxiliary signal (H2) using a low-pass filter (16) and a reduction (17) of the sampling rate to the second sampling rate.

5. Method according to one of the preceding claims, **characterized in that** a third auxiliary signal (H3) is produced from an amplitude-demodulated FM intermediate frequency signal (18) by means of low-pass filtering (19) and reduction (20) of the sampling rate.

6. Method according to one of the preceding claims, **characterized in that** combining the auxiliary signals (H1, H2, H3) produces a first control signal (D), which influences the stereo channel separation, and a second control signal (AFE-AMU), which reduces the volume of the reproduced useful signals (L, R) in the event of interference.

7. Method according to one of the preceding claims, **characterized in that** the first and the second sampling rate have an integer ratio with respect to one another.

8. Method according to Claim 7, **characterized in that** the first sampling rate is 228 kHz and the second sampling rate is 9.5 kHz.

9. Method according to one of the preceding claims, **characterized in that** the stereo multiplex signal (MPX 1) can be supplied in digital form by a reception device (2) at a third sampling rate, which is above the first sampling rate and is preferably twice the first sampling rate.

10. Method according to one of the preceding claims, **characterized in that** the stereo multiplex signal, the useful signals, the auxiliary signals (H1, H2, H3) and the control signals (D, AFE-AMU) are processed in a digital signal processor using a program which comprises program parts for processing the stereo multiplex signal and the useful signals, and n program parts for processing the auxiliary and control signals, where n is the ratio of the first to the second sampling rate, and **in that** the program per se is repeatedly executed at a frequency corresponding to the first sampling rate, the program parts for processing the stereo multiplex signal and the useful signals and, in each case, one other of the program parts for processing the auxiliary and control signals being executed with each pass.

11. Broadcast radio receiver with digital signal processing, having a tuner (2) for receiving a stereo multiplex signal, having first means (6, 7, 8, 9, 10) for processing the received stereo multiplex signal and useful signals derived therefrom in digital form at a first sampling rate, having means for reducing the sampling rate (14, 15, 17, 20) for auxiliary signals derived, at least to some extent, from the stereo multiplex signal to a second sampling rate, which is lower than the first sampling rate, having further means for processing the auxiliary signals (H1, H2, H3) at the second sampling rate, having means for increasing the sampling rate (22, 23) for the processed auxiliary signals to the first sampling rate, and having means (8, 9, 10) for influencing the stereo multiplex signal and the useful signals derived therefrom using the control signals, formed from the auxiliary signals, at the first sampling rate.

## Revendications

1. Procédé de traitement numérique de signaux radio reçus,
**caractérisé en ce que**
- un signal multiplex stéréo reçu et les signaux utiles qui en sont déduits sont traités sous forme numérique selon un premier taux de détection,
- des signaux auxiliaires (H1, H2, H3) déduits au moins en partie du signal multiplex stéréo sont transformés selon un second taux de détection inférieur au premier taux de détection pour être traités avec ce second taux de détection,
- les taux de détection des signaux auxiliaires traités sont remontés au premier taux de détection, et
- les signaux auxiliaires traités agissent comme signaux de commande (D, AFE-AMU) avec le premier taux de détection sur le signal multiplex stéréo et les signaux utiles (L, R) .

2. Procédé selon la revendication 1,
**caractérisé en ce que**
directement après la remontée du taux de détection (22, 23) des signaux auxiliaires traités, on poursuit par un filtrage passe-bas (22', 23') appliqué au premier taux de détection.

3. Procédé selon l'une quelconque des revendications 1 ou 2,
**caractérisé en ce qu'**
on déduit un premier signal auxiliaire (H1) qui contient les composantes spectrales du signal multiplex stéréo entre la limite supérieure de la plage des fréquences utiles du signal multiplex stéréo et le premier taux de détection, et dont le taux de détection est abaissé au second taux de détection.

4. Procédé selon l'une quelconque des revendications 2 ou 3,
**caractérisé en ce que**
par le codage stéréo on génère un signal de symétrie en quadrature avec la bande de différence L-R et qui forme le second signal auxiliaire (H2), par l'intermédiaire d'un filtre passe-bas (16) et d'une réduction de taux de détection (17) au second taux de détection.

5. Procédé selon l'une quelconque des revendications précédentes,
**caractérisé en ce qu'**
à partir d'un signal de fréquence intermédiaire FM à démodulation d'amplitude (18), par filtrage passe-bas (19) et réduction du taux de détection (20), on forme un troisième signal auxiliaire (H3).

6. Procédé selon l'une quelconque des revendications précédentes,
**caractérisé en ce que**
par une combinaison des signaux auxiliaires (H1, H2, H3) on forme un premier signal de commande (D) qui influence la séparation des voies stéréo et un second signal de commande (AFE-AMU) qui en cas de perturbation, diminue le volume sonore des signaux utiles reproduits (L, R).

7. Procédé selon l'une quelconque des revendications précédentes,
**caractérisé en ce que**
le premier et le second taux de détection sont dans un rapport entier.

8. Procédé selon la revendication 7,
**caractérisé en ce que**
le premier taux de détection est égal à 228 kHz et le second taux de détection à 9,5 kHz.

9. Procédé selon l'une quelconque des revendications précédentes,
**caractérisé en ce que**
le signal multiplex stéréo (MPX1) est appliqué par une installation de réception (2) sous une forme numérique avec un troisième taux de détection situé au-dessus du premier taux de détection et correspondant de préférence au double du premier taux de détection.

10. Procédé selon l'une quelconque des revendications précédentes,
**caractérisé en ce que**
- le traitement du signal multiplex stéréo, des signaux utiles, des signaux auxiliaires (H1, H2, H3) et des signaux de commande (D, AFE-AMU) se fait dans un processeur numérique de signal à l'aide d'un programme et ce programme contient les parties de programme pour traiter le signal multiplex stéréo et les signaux utiles ainsi que n parties de programme de traitement des signaux auxiliaires et des signaux de commande, n étant le rapport entre le premier et le second taux de détection, et
- le programme est parcouru en soi à une fréquence correspondant à un premier taux de détection, et à chaque parcours on exécute les parties de programme pour le traitement du signal multiplex stéréo et les signaux utiles, et chaque fois une autre partie de programme pour traiter les signaux auxiliaires et de commande.

11. Récepteur radio à traitement numérique de signal, avec un tuner (2) pour recevoir un signal multiplex stéréo, comprenant :
- des premiers moyens (6, 7, 8, 9, 10) pour traiter le signal multiplex stéréo reçu et les signaux utiles qui en sont déduits, sous forme numérique, selon un premier taux de détection,
- des moyens pour réduire le taux de détection (14, 15, 17, 20) de signaux auxiliaires déduits au moins en partie du signal multiplex stéréo sur un second taux de détection, plus petit que le premier taux de détection,
- d'autres moyens pour traiter les signaux auxiliaires (H1, H2, H3) avec le second taux de détection,
- des moyens pour remonter au premier taux de détection le taux de détection (22, 23) des signaux auxiliaires traités, et
- des moyens (8, 9, 10) pour influencer le signal multiplex stéréo et les signaux utiles qui en sont déduits par les signaux de commande formés à partir des signaux auxiliaires, au premier taux de détection.
